# EUROPEAN PATENT SPECIFICATION

(11) **EP 3 129 746 B1**
(45) Date of publication and mention of the grant of the patent: **03.01.2018**
(21) Application number: 15720789.5
(22) Date of filing: 26.03.2015
(51) Int. Cl.: G01B 5/00

(54) **DEVICE FOR POSITIONING A SENSOR IN A PLANT FOR THE PRODUCTION OF BLOWN FILMS**
VORRICHTUNG ZUR POSITIONIERUNG EINES SENSORS IN EINER ANLAGE ZUR HERSTELLUNG VON BLASFOLIEN
DISPOSITIF PERMETTANT LE POSITIONNEMENT D'UN CAPTEUR DANS UNE PLANTE POUR LA PRODUCTION DE FILMS SOUFFLÉS

(30) Priority: 08.04.2014 IT MI20140653
(43) Date of publication of application: 15.02.2017
(73) Proprietor: Syncro S.r.l., 21052 Busto Arsizio (VA) (IT)
(72) Inventor: CACCIA, Gabriele, I-21052 Busto Arsizio (VA) (IT); RIZZOTTI, Paolo, I-28100 Novara (NO) (IT); NAPPA, Enrico, I-21056 Induno Olona (VA) (IT)
(74) Representative: Concone, Emanuele
(86) International application number: PCT/IB2015/052246
(87) International publication number: WO 2015/155621

(56) References cited:
- EP-A1- 1 116 931
- US-A1- 2006 130 351
- US-A1- 2011 265 556

## Description

The present invention concerns plants for the production of blown films, i.e. plastic films extruded in the form of bubble, and in particular a device for positioning a sensor of the film thickness.

The measurement of the thickness of a blown plastic film is usually performed by a sensor that can be of various types (capacitive, optical, nuclear, etc.), can be in contact or not with the surface of the film to be measured, and can be rotating or oscillating around the cylindrical surface of the tubular film. More specifically, the sensor is generally carried by an adjustable support mounted on a rotating bearing or on one or two trolleys rotating on a circular track, so as to follow a trajectory concentric with the axis of the bubble with continuous circular motion or with reversal of the direction of motion every 360°.

The thickness sensor in addition to rotating or oscillating around the axis of the cylindrical body constituting the bubble must also move radially to accommodate the variation in the diameter of the bubble in the different formats that a line is able to produce and to adapt to the inevitable variations in diameter during blowing. For a correct measurement of the thickness it is obvious that at the end of the radial positioning of the sensor it must be oriented exactly in the radial direction towards the axis of the bubble.

Prior art devices which enable such positioning operate in three basic ways, namely by moving the sensor in the radial direction by means of a linearly extensible cantilever support, or via a rotating cantilever support or, finally, using as a support a traverse pivotally mounted on a pair of trolleys which are movable individually.

In the first type of device the sensor is therefore mounted at the end of a telescopic rod, a pantograph or the like which moves it directly in the radial direction and is mounted on a bearing or a trolley for rotation around the bubble. A similar solution has problems of stability and oscillations/vibrations due to the cantilever structure, which for significant lengths also causes a high torque in the vertical plane at the coupling to the bearing or trolley, and therefore requires a robust construction, heavy and expensive.

In the second type of device the sensor is mounted at the end of a rigid inextensible rod arranged on a bearing or a trolley for rotation around the bubble and rotatable in the horizontal plane for the radial displacement, as shown for example in US 2011/265556. Such a solution presents fewer problems of stability and oscillations/vibrations since the cantilever structure is more rigid, but still implies a significant torque in the vertical plane at the coupling to the bearing or trolley. Furthermore, it requires a mechanism (e.g. cam, gear, lever, etc.) to orient the sensor in the radial direction, said mechanism thereby increasing the weight of the cantilever structure and the cost and complexity of the device.

Both of these types of device due to the presence of cantilever elements are therefore at risk of failure, damage and even breakage with falling from above in the case not frequent but possible of rupture of the bubble that gets dragged upward by the calender of the line and may hook to the cantilever sensor or to its support, causing an uncontrolled upward traction that would tear away the device from its rotating support.

In the third type of device the sensor is carried by a traverse pivotally mounted on a pair of trolleys that follow a circular track and can be moved individually. In other words, the trolleys define an arc of circumference the extension of which depends on the relative motion between the trolleys and the traverse mounted on them accordingly approaches or moves away radially from the axis of the bubble.

A first solution described in EP 1116931 provides a rigid inextensible traverse which is mounted on the trolleys not only rotatably but also in a sliding manner, so that upon variation of the arc of circumference defined by the trolleys the traverse continues to define the chord that this arc subtends. A similar configuration is much more stable and safe than those described above since it does not includes cantilever elements, however it presents serious problems of bulkiness because when the trolleys approach to move the traverse radially outwards the latter not only rotates but also slides with respect to the trolleys such that its ends protrude outside the track.

To overcome this problem US 2006/130351 provides the use of an articulated traverse formed by two rigid semi-traverses rotatably connected both to each other and to the trolleys. This central articulation of the traverse may be accomplished by a rotating or flexible joint, and the sensor is mounted on a platform located in correspondence with the joint. In this way, upon variation of the arc of circumference defined by the trolleys also the angle between the two semi-traverses will vary, ranging from acute to obtuse, causing a radial displacement of the sensor without having the traverse protrude outside the track.

In other words, this second solution with the articulated traverse corresponds to the combination of two devices of the second type hinged at their free ends. In this way, one can do without the mechanism for orienting the sensor in the radial direction, since the rotational motions of the two semi-traverses are synchronized and maintain the sensor properly oriented, but the problems of torque on the trolleys remain substantially unchanged especially when the two semi-traverses are oriented towards the axis of the minimum diameter bubble.

Although it solves the problems of bulkiness of the first solution with rigid traverse, this second solution with articulated traverse is more complex and expensive and obviously less rigid, which results in greater vibrations on the sensor. Note also that the platform that carries the sensor may also provide an additional mechanism for the fine adjustment of the sensor position in the radial direction, for example by means of a slidable rod or the like, and in this case the weight in the central area of the articulated traverse increases significantly causing further problems of stability and torque on the trolleys.

US 2006/130351 also briefly mentions the possibility that the traverse be a telescopic traverse designed so as to ensure that the intermediate part carrying the sensor remains always exactly in the middle between the trolleys, but no indication is given on how this can be done nor such an embodiment is illustrated in the figures. In practice, the document describes only generically a traverse formed by two telescopic elements, but does not provide any teaching on how to adjust the length of the traverse and on how to maintain the sensor in a centered position and oriented radially towards the center of the bubble when varying the length of the traverse.

The object of the present invention is therefore to provide a device for positioning the thickness sensor which is free from the drawbacks described above. This object is achieved by means of a device of the third type described above comprising a traverse that is rigid but adjustable in length through the relative motion of at least three mutually sliding parts, the sensor being mounted on an intermediate part that is not fixed to the trolleys and keeps the sensor always in the center position. The exact features of the device according to the invention are specified in independent claim 1. Further advantageous characteristics of the subject device are specified in the dependent claims.

The main advantage of this device is to combine the best features of strength and stability of the first solution with rigid traverse without however having bulkiness problems since the traverse does not protrude beyond the track, with the capacity of the second solution with articulated traverse to maintain always the sensor properly positioned and oriented without resorting to a specific mechanism.

A second advantage of the present device is that of being able to have an additional mechanism for the fine adjustment of the sensor position in the radial direction without the weight increase in the central area of the traverse causing problems of stability and torque on the trolleys, thanks to the rigidity of the joint-free traverse.

Another advantage of this device stems from the fact that it is made with traditional, simple and inexpensive components and that it can also be installed on existing plants as an after-market upgrade.

Further advantages and characteristics of the device according to the present invention will become apparent to those skilled in the art from the following detailed and non-limiting description of two embodiments thereof with reference to the accompanying drawings in which:
Fig.1 is a top plan view of a first embodiment of the device adjusted for measuring the thickness of a blown film at the maximum diameter D of the bubble;
Fig.2 is a view similar to the previous one with the device adjusted for the measurement of the film thickness at the minimum diameter d of the bubble;
Fig.3 is a front view of a telescopic sensor-carrying traverse of the device of Fig.1 mounted on associated trolleys;
Fig.4 is a view in longitudinal section of the traverse of Fig.3 seen from above;
Fig.5 is a front view of a telescopic sensor-carrying traverse of a second embodiment of the device; and
Fig.6 is a view in longitudinal section of the traverse of Fig.5 seen from above.

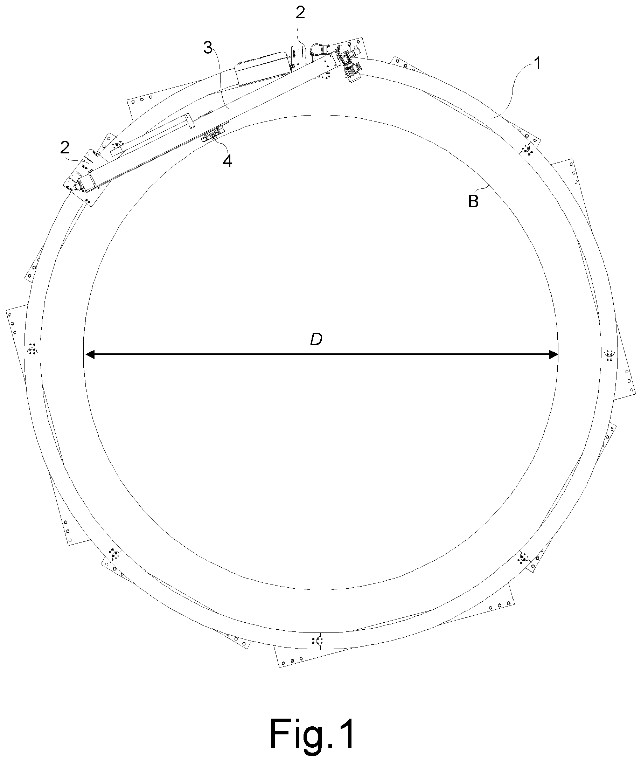

Referring to figures 1 to 4, there is seen that a device according to the present invention conventionally includes a circular track 1 along which run two trolleys 2 provided with vertical pins 2a for rotatably mounting the ends of a traverse 3 which centrally carries a sensor 4 suitable to measure the thickness of a film extruded in the form of a cylindrical bubble B concentric with track 1. As mentioned earlier, trolleys 2 are individually movable and can have a continuous circular motion or move with an inversion of the direction of motion every 360°, the continuous motion being preferable for the speed and periodicity of the measurements as well as for a lower wear of the device.

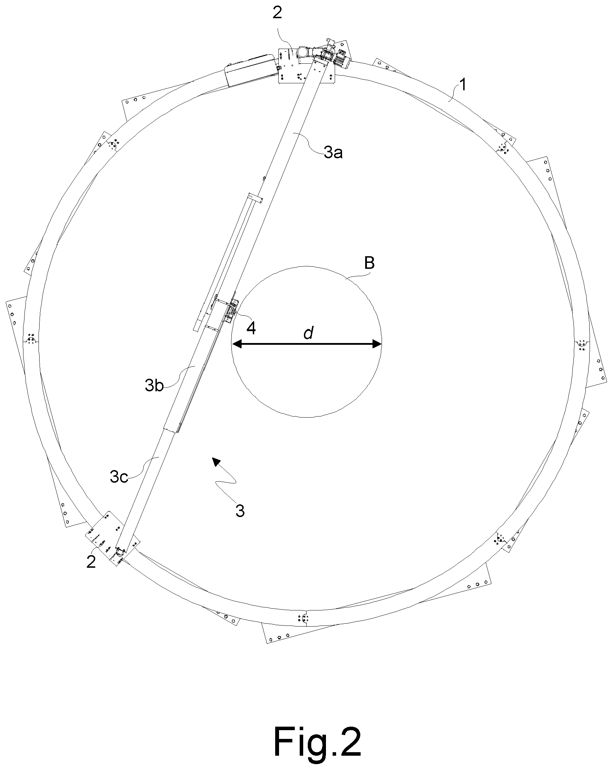

The novel aspect of the device according to the present invention resides in the presence of a rigid traverse 3, that is not articulated and therefore more robust and stable, which is able to go from the minimum length of Fig.1 to the maximum length of Fig.2 and vice versa without ever protruding outside track 1 and always keeping sensor 4 in a central position between the end pins 2a.

In the following, specific reference will be made to a traverse made up of three parts mutually sliding in a telescopic manner, but the person skilled in the art is readily able to apply the teachings provided herein to other equivalent structures in which the parts slide in a different way, for example arranged side-by-side horizontally or stacked vertically. It is also clear that although three is the minimum number of parts that make up the traverse, in the sense of structural parts and without taking into account auxiliary components described below, it would however be possible to provide a greater number of parts according to specific constructive requirements.

In the first embodiment of the device illustrated in these figures, traverse 3 is composed of three concentric cylinders 3a, 3b and 3c, of preferably square section but they could have any other suitable shape. The external cylinder 3a and the internal cylinder 3c are mounted on pins 2a for fixing traverse 3 to trolleys 2, while sensor 4 is mounted on the intermediate cylinder 3b preferably through an L-section 5 which extends on both the internal and bottom sides of the external cylinder 3a.

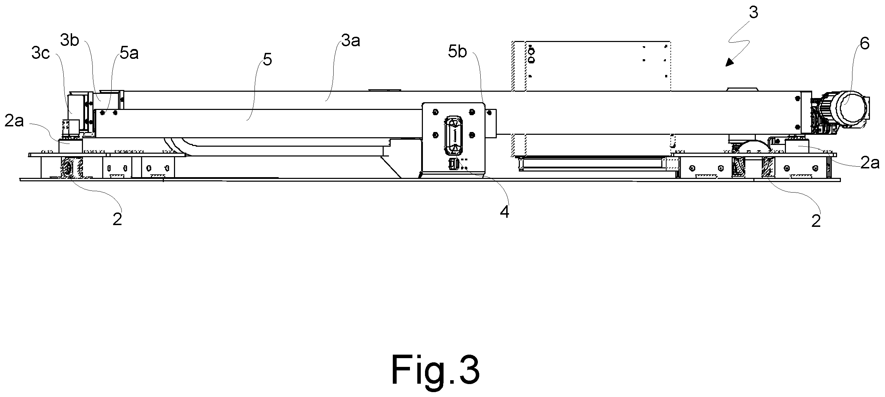

More specifically, the section member 5 is fixed to the internal and bottom sides of the intermediate cylinder 3b through screws 5a in correspondence with an end portion that always protrudes with respect to the external cylinder 3a, also in the condition of minimum length of Fig.3, and through screws 5b (only one being visible in Fig.3) in correspondence with a central portion. The screws 5b engage said central portion of the intermediate cylinder 3b passing through corresponding slots formed in the external cylinder 3a (and not visible in the figures) which extend up to the position reached by screws 5b in the condition of maximum length of Fig.2.

In this way, section 5 and sensor 4 attached thereto while being external to traverse 3 are integral with the intermediate cylinder 3b without interfering with the relative sliding of the three parts 3a, 3b and 3c over the entire range of variation in length of traverse 3. Note that this mounting solution was designed to ensure maximum stability to sensor 4, but section 5 is not strictly indispensable and sensor 4 might be mounted directly on the intermediate cylinder 3b only in correspondence with the central portion and possibly even on one side only, in which case the external cylinder 3a would have only one longitudinal slot.

The adjustment of the length of traverse 3, i.e. the relative sliding of the three parts that make it up, is achieved by a motor 6 mounted on the end of the external cylinder 3a which is fixed to trolley 2. The problem of keeping sensor 4 always in a central position when varying the length of traverse 3 is solved by using two longitudinal threaded bars 7, 8 simultaneously driven by motor 6 for the sliding respectively of the internal cylinder 3c and of the intermediate cylinder 3b.

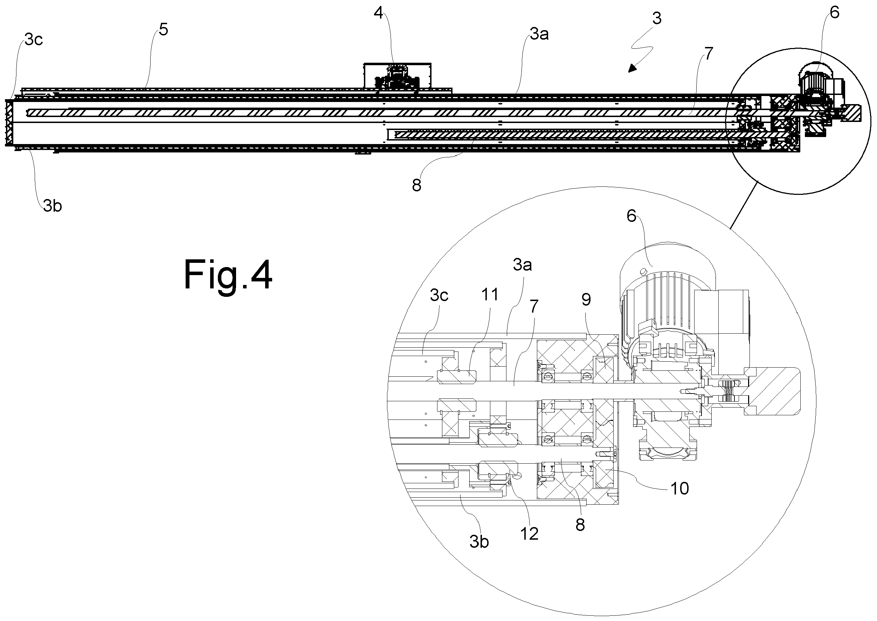

As best illustrated in the enlarged detail of Fig.4, motor 6 directly drives bar 7 which via a gear 9 integral therewith transmits the motion to an identical gear 10 integral with the other bar 8. The first threaded bar 7 engages a first internally threaded sleeve 11 which is integral with the internal cylinder 3c, and similarly the second threaded bar 8 engages a second internally threaded sleeve 12 which is integral with the intermediate cylinder 3b.

In order to keep sensor 4 always in a central position it must move by a distance equal to half of the variation in length of traverse 3, so as to remain always in the middle between the two pins 2a. To this purpose, the thread of the first bar 7 has a pitch twice that of the thread of the second bar 8 so that the same number of turns of the two bars 7, 8 causes a displacement of the intermediate cylinder 3b which is half of the displacement of the internal cylinder 3c that corresponds to the change in length of traverse 3.

In other words, in this three-part telescopic traverse 3 the displacement of the intermediate cylinder 3b does not contribute to the variation in length of the traverse as in a conventional telescopic traverse since the internal cylinder 3c is mounted directly on the external cylinder 3a through sleeve 11 and threaded bar 7. Thus the displacement of the internal cylinder 3c corresponds to the variation in length of the traverse and the corresponding halved displacement of the intermediate cylinder 3b serves only to keep sensor 4 in a central position, these two movements being independent of each other.

The correct orientation of sensor 4 in the radial direction is of course guaranteed by the fact that it is mounted with its measurement axis arranged perpendicular to traverse 3, which always corresponds to a chord of the circumference defined by track 1 and therefore always remains perpendicular to the radius passing through its center point where sensor 4 is located.

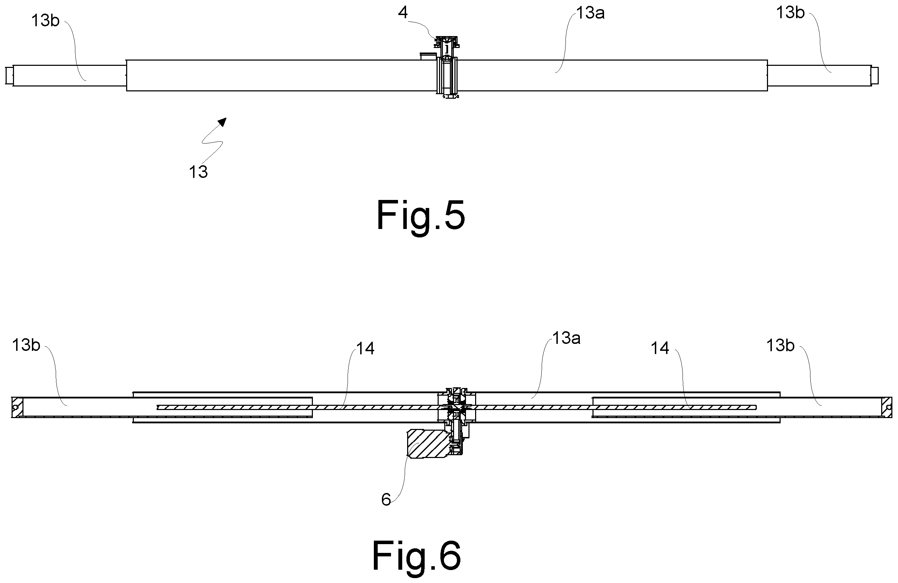

In the second embodiment illustrated in figures 5 and 6, where the same reference numerals indicate the same components, the telescopic traverse still has three parts but arranged in a different configuration and operated in a different way. In fact, traverse 13 is made up of an external cylinder 13a and two internal cylinders 13b that move symmetrically in opposite directions at the two ends of the external cylinder 13a. This symmetrical movement is preferably achieved in a similar manner to the first embodiment, namely by means of internally threaded sleeves (not shown) integral with the internal cylinders 13b, said sleeves being engaged by corresponding threaded bars 14 both driven directly by motor 6 which is mounted centrally on the external cylinder 13 a, same as sensor 4.

In this case, the displacement of both internal cylinders 13b contributes to the variation in length of traverse 13 as it is mounted on the trolleys (not shown) at the outer ends of said internal cylinders 13b, but given that their displacement is symmetrical with respect to the external cylinder 13a on which sensor 4 is mounted, said displacement does not affect the central position of sensor 4.

This alternative solution is structurally simpler but has the disadvantage of requiring the central mounting of motor 6, which implies a greater weight on traverse 13 and greater complexity of wiring. To overcome these drawbacks, it is possible to arrange motor 6 on the outer end of an internal cylinder 13b and to drive both internal cylinders 13b with a single threaded bar 14, which must have two threads with opposite direction in the two parts which respectively engage the sleeves of the two internal cylinders 13b.

It is clear that the above-described and illustrated embodiments of the device according to the invention are just examples susceptible of various modifications. In particular, as previously mentioned, other solutions mechanically equivalent to those illustrated above are within the reach of a person skilled in the art such as, for example, a variant of the first embodiment with bars 7, 8 having threads of the same pitch but with gears 9, 10 having a transmission ratio of 2:1, or having motor 6 that directly actuates bar 8 instead of bar 7.

Furthermore it is clear that the actuator means used to vary the length of traverse 3 may be of another type (pneumatic, hydraulic, etc.) or made otherwise (belts, racks, etc.). For example, in a variant of the second embodiment in which the three structural parts of the traverse are not telescopic but overlapping vertically there may be provided a pinion on the sensor-carrying central part that engages two symmetrical racks located on the lower and upper parts that are fixed to the trolleys.

## Claims

1. Device for positioning a sensor (4) in a plant for the production of blown films, said device comprising a rigid traverse (3; 13) rotatably mounted on a pair of trolleys (2) that follow a circular track (1) and can be moved individually, said sensor (4) being mounted on said rigid traverse (3; 13) at a central position and radially oriented towards the center of said circular track (1), **characterized in that** the structure of the rigid traverse (3; 13) is formed of at least three mutually sliding parts (3a, 3b, 3c; 13a, 13b) and **in that** the device further includes actuating means arranged to vary the length of the traverse (3; 13) by acting on at least two of said at least three parts (3a, 3b, 3c; 13a, 13b) that form the structure of the traverse (3; 13), the sensor (4) being mounted on an intermediate part (3b; 13a) of said at least three parts that is not secured to said trolleys (2) and always keeps the sensor (4) at a central position.

2. Device according to claim 1, **characterized in that** the traverse (3) is made up of three concentric cylinders (3a, 3b, 3c) of which an external cylinder (3a) and an internal cylinder (3c) are rotatably mounted each on one of the trolleys (2), the sensor (4) is mounted on an intermediate cylinder (3b) through at least one slot formed in said external cylinder (3a) which slot has a longitudinal extension sufficient to allow the movement of the sensor (4) over the whole range of variation of the length of the traverse (3), which length variation of the traverse (3) is achieved by the actuating means acting simultaneously on said internal cylinder (3c) and on said intermediate cylinder (3b) such that the movement of the former is twice the movement of the latter, said movements being independent of each other.

3. Device according to claim 2, **characterized in that** the actuating means consist of a motor (6) that drives a first threaded bar (7, 8) which through a first gear (9, 10) integral therewith transmits the motion to a second gear (9, 10) integral with a second threaded bar (7, 8), one of said threaded bars (7) engaging a first internally threaded sleeve (11) that is integral with the internal cylinder (3c) and the other threaded bar (8) engaging a second internally threaded sleeve (12) that is integral with the intermediate cylinder (3b), the movement of the former being twice the movement of the latter thanks to a thread of the respective bar (7) which has a pitch twice the thread of the other bar (8) or thanks to a transmission ratio of 2:1 between the respective gear (9) and the other gear (10).

4. Device according to claim 2 or 3, **characterized in that** the sensor (4) is mounted on the intermediate cylinder (3b) through an L-section (5) extending on the internal and bottom sides of the external cylinder (3a), said section (5) being secured to the internal and bottom sides of the intermediate cylinder (3b) at an end portion that always protrudes from the external cylinder (3a) and at a central portion through corresponding slots formed in the external cylinder (3a).

5. Device according to claim 1, **characterized in that** the traverse (3) is made up of an external cylinder (13a) and two internal cylinders (13b) that move symmetrically in opposite directions at the two ends of said external cylinder (13a) under the action of the actuating means, the sensor (4) being mounted on the external cylinder (13a) and the traverse (13) being mounted on the trolleys (2) at the external ends of said internal cylinders (13b).

6. Device according to claim 5, **characterized in that** the actuating means consist of a motor (6) that drives a pair of threaded bars (14) which engage respective internally threaded sleeves integral with the internal cylinders (13b), said motor (6) being centrally mounted on the external cylinder (13a).

7. Device according to claim 5, **characterized in that** the actuating means consist of a motor (6) that drives a threaded bar (14) which engages respective internally threaded sleeves integral with the internal cylinders (13b), said threaded bar (14) having two threads with opposite direction in the two portions that respectively engage the sleeves of the two internal cylinders (13b).

## Patentansprüche

1. Vorrichtung zur Positionierung eines Sensors (4) in einer Anlage zur Herstellung von Blasfolien, wobei die besagte Vorrichtung eine biegesteife Traverse (3; 13) umfasst, die auf einem Paar von Schlitten (2) drehbar gelagert ist, welche einer kreisförmigen Bahn (1) folgen und einzeln bewegbar sind, wobei der besagte Sensor (4) auf der besagten, biegesteifen Traverse (3; 13) an einer zentralen Position montiert und radial zu dem Zentrum der besagten, kreisförmigen Bahn (1) ausgerichtet ist, **dadurch gekennzeichnet, dass** die Struktur der biegesteifen Traverse (3, 13) aus wenigstens drei gegeneinander gleitenden Teilen (3a, 3b, 3c; 13a, 13b) besteht, und dadurch, dass die Vorrichtung ferner ein Betätigungsmittel aufweist, das zur Variation der Länge der Traverse (3; 13) durch Einwirkung auf wenigstens zwei der besagten wenigstens drei Teile (3a, 3b, 3c; 13a, 13b) ausgebildet ist, welche die Struktur der Traverse (3; 13) bilden, wobei der Sensor (4) auf einem Zwischenteil (3b; 13a) der wenigstens drei Teile montiert ist, welches nicht mit den besagten Schlitten (2) verbunden ist und den Sensor (4) immer an einer zentralen Position hält.

2. Vorrichtung nach Anspruch 1, **dadurch gekennzeichnet, dass** die Traverse (3) aus drei konzentrischen Zylindern (3a, 3b, 3c) besteht, von denen ein äußerer Zylinder (3a) und ein innerer Zylinder (3c) jeweils drehbar auf einem der Schlitten (2) montiert ist, wobei der Sensor (4) auf einem Zwischenzylinder (3b) mit Hilfe wenigstens eines Schlitzes in dem besagten, äußeren Zylinder (3a) montiert ist, wobei der Schlitz eine Längserstreckung aufweist, die ausreichend ist, um dem Sensor (4) eine Bewegung über den ganze Variationsbereich der Länge der Traverse (3) zu erlauben, wobei die Längenänderung der Traverse (3) durch ein Betätigungsmittel erreicht wird, das gleichzeitig auf den inneren Zylinder (3c) und auf den besagten Zwischenzylinder (3b) einwirkt, so dass die Bewegung des ersteren zweimal so groß ist wie die Bewegung des letzteren, wobei die besagten Bewegungen unabhängig voneinander sind.

3. Vorrichtung nach Anspruch 2, **dadurch gekennzeichnet, dass** das Betätigungsmittel aus einem Motor (6) besteht, der eine erste Gewindestange (7, 8) antreibt, die durch ein erstes, mit ihr integriertes Zahnrad (9, 10) die Bewegung auf das zweite Zahnrad (9, 10) überträgt, das mit einer zweiten Gewindestange (7, 8) integriert ist, wobei eine der besagten Gewindestangen (7) in Eingriff ist mit einer ersten, mit einem Innengewinde versehenen Hülse (11), die mit dem inneren Zylinder (3c) integral ausgebildet ist, während die andere Gewindestange (8) in Eingriff ist mit einer zweiten, mit einem Innengewinde versehenen Hülse (12), die mit dem Zwischenzylinder (3b) integral ausgebildet ist, wobei die Bewegung des ersteren zweimal so groß ist wie die Bewegung des letzteren, dank eines Gewindes an der betreffenden Stange (7), das eine Steigung aufweist, die doppelt so groß ist wie bei dem Gewinde an der anderen Stange (8), oder dank einem Übersetzungsverhältnis von 2 : 1 zwischen dem entsprechenden Zahnrad (9) und dem anderen Zahnrad (10).

4. Vorrichtung nach Anspruch 2 oder 3, **dadurch gekennzeichnet, dass** der Sensor (4) auf dem Zwischenzylinder (3b) mittels einer L-Sektion (5) montiert ist, die sich an der inneren und unteren Seite des Außenzylinders (3a) erstreckt, wobei die besagte Sektion (5) in einem Endbereich, der stets aus dem Außenzylinder (3a) herausragt, an der inneren und unteren Seite des Zwischenzylinders (3b) festgelegt ist, sowie in einem zentralen Bereich durch entsprechende, in dem Außenzylinder (3a) ausgebildete Schlitze.

5. Vorrichtung nach Anspruch 1, **dadurch gekennzeichnet, dass** die Traverse (3) aus einem äußeren Zylinder (13a) und zwei inneren Zylindern (13b) besteht, die sich bei einer Betätigung des Betätigungsmittels an den zwei Enden des äußeren Zylinders (13a) symmetrisch zueinander in entgegengesetzte Richtungen bewegen, wobei der Sensor (4) auf dem äußeren Zylinder (13a) montiert ist, und wobei die Traverse (13) auf den Schlitten (2) an den äußeren Enden der besagten Zwischenzylinder (13b) montiert ist.

6. Vorrichtung nach Anspruch 5, **dadurch gekennzeichnet, dass** das Betätigungsmittel aus einem Motor (6) besteht, der ein Paar von Gewindestangen (14) antreibt, welche in Eingriff stehen mit jeweils einer inneren Gewindehülse, die mit den inneren Zylindern (13b) integral ausgebildet sind, wobei der besagte Motor (6) in der Mitte des äußeren Zylinders (13a) montiert ist.

7. Vorrichtung nach Anspruch 5, **dadurch gekennzeichnet, dass** das Betätigungsmittel aus einem Motor (6) besteht, der eine Gewindestange (14) antreibt, die in Eingriff steht mit entsprechenden, mit einem Innengewinde versehenen Hülsen, die mit den Zwischenzylindern (13b) integral ausgebildet sind, wobei die Gewindestange (14) in den zwei Abschnitten, welche jeweils mit einer betreffenden Hülse der zwei inneren Zylinder (13b) in Eingriff stehen, zwei Gewinde mit entgegengesetzten Steigungen aufweist.

## Revendications

1. Dispositif pour positionner un capteur (4) dans une installation pour la production de films soufflés, ledit dispositif comprenant une traverse rigide (3 ; 13) montée, en rotation, sur une paire de chariots (2) qui suivent une piste circulaire (1) et peuvent être déplacés individuellement, ledit capteur (4) étant monté sur ladite traverse rigide (3 ; 13) dans une position centrale et radialement orienté vers le centre de ladite piste circulaire (1), **caractérisé en ce que** la structure de la traverse rigide (3 ; 13) est formée avec au moins trois parties mutuellement coulissantes (3a, 3b, 3c ; 13a, 13b) et **en ce que** le dispositif comprend en outre des moyens d'actionnement agencés pour modifier la longueur de la traverse (3 ; 13) en agissant sur au moins deux desdites au moins trois parties (3a, 3b, 3c; 13a, 13b) qui forment la structure de la traverse (3 ; 13), le capteur (4) étant monté sur une partie intermédiaire (3b ; 13a) desdites au moins trois parties qui n'est pas fixée sur lesdits chariots (2) et maintient toujours le capteur (4) dans une position centrale.

2. Dispositif selon la revendication 1, **caractérisé en ce que** la traverse (3) est composée de trois cylindres concentriques (3a, 3b, 3c) dont un cylindre externe (3a) et un cylindre interne (3c) sont montés, en rotation, chacun sur un des chariots (2), le capteur (4) est monté sur un cylindre intermédiaire (3b) à travers au moins une fente formée dans ledit cylindre externe (3a), laquelle fente a une extension longitudinale suffisante pour permettre le mouvement du capteur (4) sur toute la plage de variation de la longueur de la traverse (3), laquelle variation de longueur de la traverse (3) est obtenue par les moyens d'actionnement qui agissent simultanément sur ledit cylindre interne (3c) et sur ledit cylindre intermédiaire (3b) de sorte que le mouvement du premier représente deux fois le mouvement du dernier, lesdits mouvements étant indépendants l'un de l'autre.

3. Dispositif selon la revendication 2, **caractérisé en ce que** les moyens d'actionnement se composent d'un moteur (6) qui entraîne une première barre filetée (7, 8) qui, par le biais d'un premier engrenage (9, 10) solidaire de cette dernière, transmet le mouvement à un second engrenage (9, 10) solidaire d'une seconde barre filetée (7, 8), l'une desdites barres filetées (7) mettant en prise un premier manchon intérieurement fileté (11) qui est solidaire du cylindre interne (3c) et l'autre barre filetée (8) mettant en prise un second manchon intérieurement fileté (12) qui est solidaire du cylindre intermédiaire (3b), le mouvement du premier représentant deux fois le mouvement du dernier grâce à un filetage de la barre (7) respective qui a un pas représentant deux fois le filetage de l'autre barre (8) ou grâce à un rapport de transmission de 2:1 entre l'engrenage (9) respectif et l'autre engrenage (10).

4. Dispositif selon la revendication 2 ou 3, **caractérisé en ce que** le capteur (4) est monté sur le cylindre intermédiaire (3b) par le biais d'une section en L (5) s'étendant sur les côtés interne et inférieur du cylindre externe (3a), ladite section (5) étant fixée sur les côtés interne et inférieur du cylindre intermédiaire (3b) au niveau d'une partie d'extrémité qui fait toujours saillie du cylindre externe (3a) et au niveau d'une partie centrale à travers des fentes correspondantes formées dans le cylindre externe (3a).

5. Dispositif selon la revendication 1, **caractérisé en ce que** la traverse (3) est composée d'un cylindre externe (13a) et de deux cylindres internes (13b) qui se déplacent symétriquement dans une direction opposée au niveau des deux extrémités dudit cylindre externe (13a) sous l'action des moyens d'actionnement, le capteur (4) étant monté sur le cylindre externe (13a) et la traverse (13) étant montée sur les chariots (2) au niveau des extrémités externes desdits cylindres internes (13b).

6. Dispositif selon la revendication 5, **caractérisé en ce que** les moyens d'actionnement se composent d'un moteur (6) qui entraîne une paire de barres filetées (14) qui mettent en prise des manchons intérieurement filetés respectifs solidaires des cylindres internes (13b), ledit moteur (6) étant monté, de manière centrale, sur le cylindre externe (13a).

7. Dispositif selon la revendication 5, **caractérisé en ce que** les moyens d'actionnement se composent d'un moteur (6) qui entraîne une barre filetée (14) qui met en prise des manchons intérieurement filetés respectifs, solidaires des cylindres internes (13b), ladite barre filetée (14) ayant deux filetages avec une direction opposée dans les deux parties qui mettent respectivement en prise les manchons des deux cylindres internes (13b).
